# EUROPEAN PATENT APPLICATION

(11) **EP 1 487 121 A1**
(43) Date of publication of application: **15.12.2004**
(21) Application number: 03253701.1
(22) Date of filing: 11.06.2003
(51) Int. Cl.: H04B 1/04, H01P 1/36

(54) **Tunable isolator circuit**

(71) Applicant: Telefonaktiebolaget LM Ericsson (publ), 164 83 Stockholm (SE)
(72) Inventor: Kodim, Walter, 90489 Nürnberg (DE)
(74) Representative: Clarke, Alison Clare

(57) **Abstract**

An isolator circuit for an antenna system (621) comprising a tuneable isolator (601); a detector (623) for detecting a reflected signal; and a tuner for tuning the centre frequency of the isolator (601) in response to the reflected signal to reduce power consumption of the isolator circuit.

## Description

### TECHNICAL FIELD

The present invention relates to an isolator circuit for an antenna system. In particular, but not exclusively, it relates to an isolator circuit for an antenna system having power saving and phase linearisation capabilities.

### BACKGROUND OF THE INVENTION

Communication systems such as EDGE, UMTS and the like have linear modulation schemes with a peak-average ratio of about 3.8dB (for EDGE) and 5.8dB (for UMTS). Such systems require linear power amplifiers to satisfy modulation quality and adjacent power requirements.

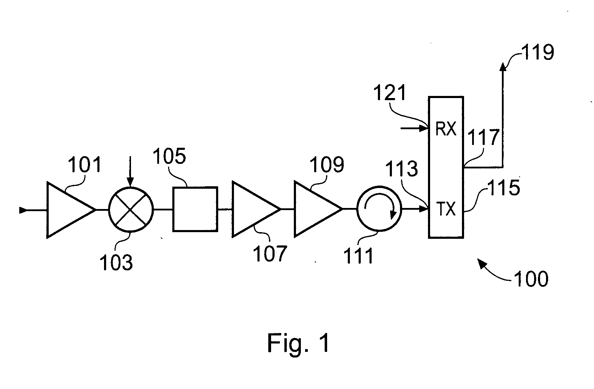

The output matching circuits of linear amplifiers are designed to achieve sufficient output power, efficiency and linearity. Poor VSWR at the power amplifier output caused by mismatch at the output also detunes the bias operation point of the amplifier. This adversely affects linearity thus leading to increased adjacent channel leakage power ratio and error vector magnitude, that is, a measure of the difference between the measured waveform and the theoretical modulated waveform. A poor antenna VSWR is common in mobile communication applications, particularly for mobile phones. Communication systems which have such linear modulation schemes utilise a circulator or isolator in the transmit path between the power amplifier and antenna to help minimise VSWR. Figure 1 shows a typical transmit-chain line-up for a full-duplex CDMA communication device.

The full-duplex CDMA transmitter system 100 of Figure 1 comprises a variable gain amplifier 101; the input of the variable gain amplifier 101 is the input of the transmitter system 100. The output of the variable gain amplifier 101 is connected to the input of a mixer 103. The output of the mixer 103 is connected to the input of a band pass filter 105. The output of the band pass filter 105 is connected to the input of an amplifier driver 107. The output of the amplifier driver 107 is connected to the input of a power amplifier 109. The output of the power amplifier 109 is connected to the input of an isolator 111. The output of the isolator 111 is connected to a first terminal 113 of a duplexer 115. A second terminal 117 of the duplexer 115 is connected to an antenna system 119. A third terminal 121 of the duplexer 115 is connected to the receiver path of the communication device (not shown or described here).

The input IF signal is fed into the input of the variable gain amplifier 101 and mixed by the mixer 103 and filtered by the band pass filter 105. The processed signal is then amplified by the power amplifier 109 and fed via the isolator 111 to the duplexer 115 for transmission via the antenna system 119. Any reflected signal at the first terminal 113 of the duplexer 115 caused by any mismatch between the power amplifier 109 and the antenna system 119 is isolated by the isolator 111 to assist in controlling the VSWR of the transmitter system 100.

The circulator or isolator utilised by such known communication devices as shown, for example, in Figure 1, are defined as passive devices. A circulator comprises a plurality of ports. Power is transferred from one port to the next in a prescribed order. Therefore for a three-port circulator: power entering a first port leaves via a second port and the third port is decoupled; power entering the second port leaves via the third port and the first port is decoupled; power entering the third port leaves via the first port and the second port is decoupled. For an isolator comprising two ports, power is transmitted in one direction and absorbed in the other. A circulator with an internal termination at its decoupled port, i.e. the actual port is no longer accessible externally, is equivalent to an isolator. The term "isolator" will be used throughout this specification to refer to both isolators and circulators.

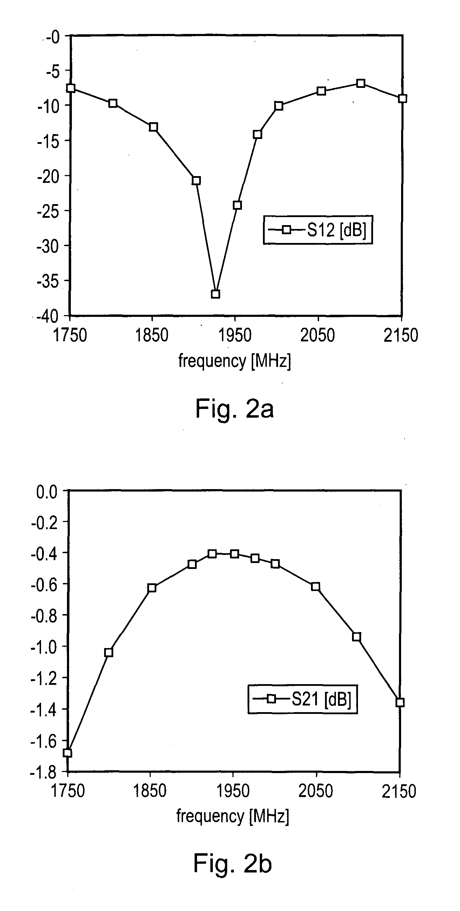

Figures 2(a) to 2(d) show measurement results of isolation and insertion loss for a UMTS isolator and EDGE (GSM900) circulator. The results show variations of the isolation and insertion loss at frequencies either side of the device centre frequency. The centre frequency of an isolator is the frequency of maximum isolation or minimum insertion loss. The operating bandwidth of the device is defined as the range where isolation remains above a certain value such as 15dB and the insertion loss remains below a certain value (0.8dB). The instantaneous bandwidth is defined as the frequency range where isolation remains above a certain value such as 15dB and insertion remains below a certain value such as 0.8dB for a given tuning state.

Figures 2 (a) and 2 (b) illustrate isolation loss |S12| and the insertion loss |S21| versus frequency under normal ambient temperature conditions of an UMTS isolator component specification CE0401G95DCB000TT1, respectively.

As is clear from these figures, the isolator has a centre frequency of 1925MHz. At frequencies off the centre frequency, the isolation loss |S12| decreases and the insertion loss |S21| increases. This gives an operating bandwidth of approximately 60MHz, a relative bandwidth of merely 3.1%.

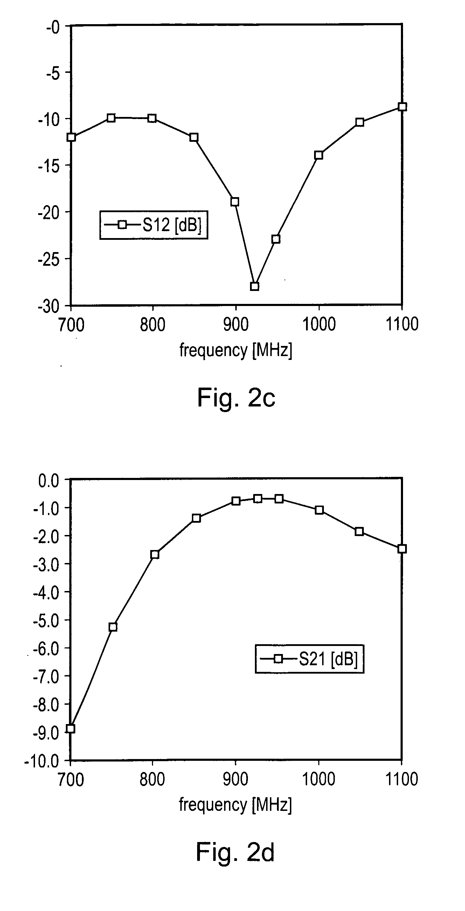

Figures 2(c) and 2(d) illustrate the isolation loss |S12| and insertion loss |S21| versus frequency under normal ambient temperature conditions of an EDGE (GSM900) circulator component specification Murata, 925A 5701 M, respectively. As illustarted by these figures, such circulators have a centre frequency of 925MHz. At frequencies off the centre frequency, the isolation loss decreases and the insertion loss increases. This gives an operating bandwidth of 35MHz, a relative bandwidth of merely 3.9%.

It should be noted that the results shown in Figures 2(a) to 2(d) include the effects of the test board the device under test is mounted on.

Consequently the useful range of operation of the commonly used isolators and circulators is severely limited. Circulators and isolators are inherently narrow band devices since the principle of operation is based on the microwave properties of ferrite material when biased with a static field.

The bandwidth provided by standard isolators or circulators is suitable for single band applications, e.g. EDGE (GSM900) and UMTS BAND I mobile phones which have a narrower bandwidth. However, dual-band mobile phones with a combination of EDGE (GSM850) and EDGE (GSM900) require a bandwidth of 46MHz instead of 25MHz. Similarly, dual-band mobile telephones with a combination of UMTS Band I and UMTS Band II require a bandwidth of 130MHZ instead of 60MHz. An isolator or circulator with a bandwidth of at least 270MHz is required for UMTS Band III and for triple-band applications. However, this is not possible with the capabilities of conventional narrow-band isolator or circulator circuits.

A simple way of widening the bandwidth is to connect a plurality of isolators or circulators together with a number of switches such that there is always at least one isolator connected between the input and output of the isolator circuit whilst the remaining isolators are disconnected or short-circuited. The circuit comprising a plurality of isolators or circulators then replaces a single isolator, e.g. between the power amplifier output and antenna port of the transmit path shown in Figure 1.

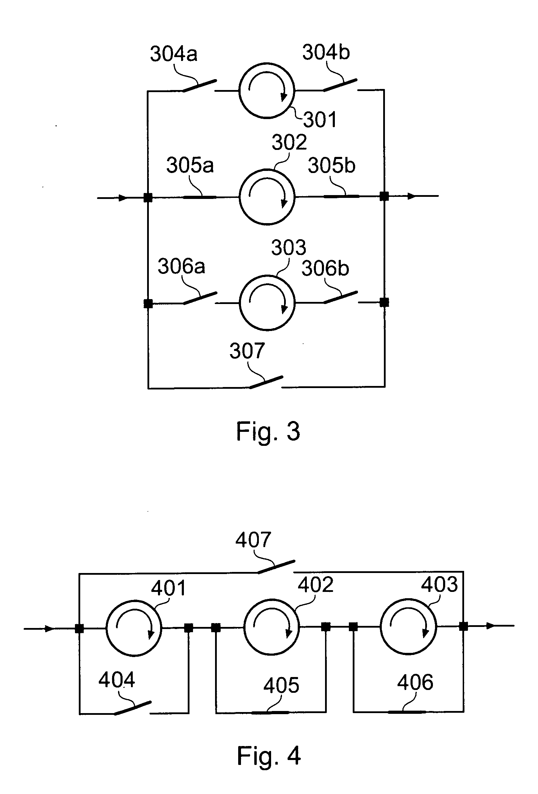

Figure 3 shows a basic parallel wideband isolator circuit with bypass switch and Figure 4 shows a basic series wideband isolator circuit with bypass switch either of which could be utilised to replace the single isolator shown in Figure 1.

As illustrated in Figure 3, three isolators 301, 302 and 303 are connected in parallel. Each isolator 301, 302 and 303 has a pair of switches 304a, 304b, 305a, 305b, 306a and 306b associated therewith. A first switch 304a, 305a and 306a is provided at the input of each isolator 301, 302 and 303 and a second switch 304b, 305b and 306b at the output of each isolator 301, 302 and 303. A fourth parallel path is provided with a bypass switch 307.

It is assumed that the first, second and third isolator 301, 302, and 303 operate at frequency ranges f1, f2 or f3, respectively. Closing the corresponding switch activates the respective isolator for that frequency range. For example, as shown in Figure 3, the first and second switches 305a and 305b of the second isolator 302 are closed and the remaining first and second switches 304a, 304b, 306a, 306b of the first and third isolators 301 and 303 and the bypass switch 307 are open, activating the second isolator 302 only. The first and third isolators 301 and 303 are deactivated. If no isolation is required, all the isolators are bypassed by closing the bypass switch 307.

Of course the isolator bypass switch may also be utilised in a circuit comprising a single isolator and in the event that isolation is not required the bypass switch is closed, e.g. in a power amplifier output and duplexer TX port in GSM (GMSK modulation)/ EDGE (3pi/8-shifted-8PSK modulation) dual-mode mobile communication devices.

The first and second switches 304a, 304b, 305a, 305b, 306a and 306b of the isolators 301, 302 and 303 of the basic parallel wideband isolator circuit shown in Figure 3 may be replaced by a triplexer circuit, that is a frequency dependent SP3T switch.

The structure of the parallel wideband isolator can be transformed into a series structure where each isolator 401, 402 and 403 is connected in series. As shown in Figure 4, the output of a first isolator 401 is connected to the input of a second isolator 402. The output of the second isolator 402 is connected to the input of a third isolator 403. A first, second and third switch 404, 405 and 406 is connected in parallel to each isolator 401, 402. and 403. In this way any isolator can be short-circuited with a corresponding switch 404, 405 and 406.

It is assumed that each isolator 401, 402 and 403 operates at frequencies f1, f2 or f3, respectively. Opening any one of the corresponding first, second or third switches 404, 405 and 406 activates the respective isolator 401, 402 and 403. All other switches are kept closed and thus the remaining isolators are short-circuited. For example, as shown in Figure 4, second and third switches 405 and 406 are closed shorting out the second and third isolators 402 and 403 leaving the first isolator 401 activated.

A bypass switch 407 may also be included and connected in parallel to the whole circuit. As described with reference to Figure 3, if no isolation is required, the bypass switch 407 is closed, shorting out all of the isolators 401, 402 and 403. The function of the bypass switch 407 may be replaced by simply setting the first, second and third switches 404, 405 and 406 in their closed position. However, the overall insertion loss would rise by a factor of 3 assuming that the first, second and third switches are identical.

Alternatively, the narrow band isolators can be connected in series without any switches to increase the bandwidth. In any event, this would considerably increase the overall insertion loss of the circuit.

Although combination of switches and isolators increases the frequency range of a single (narrow band) isolator, it increases circuit complexity, implementation area and cost. Single pole-multiple through switches, for example a triplexer switch is more complex and expensive. The complexity and expense increases as the number of through poles increases, especially for high power applications. Furthermore, the total number of switches will finally limit the overall performance in terms of total insertion loss (switch closed) and cross talk (switch open).

The main focus has been on isolator circuits having single input and output, as these are more suitable for typical power amplifiers (modules) with single output. Single output power amplifiers typically reuse the same die for multiple frequency bands thus saving material costs, e.g. multi-band power amplifiers (single output GSM850/GSM900 and GSM1800/GSM1900) RMPA 1958-99.

The centre frequency of an isolator (frequency of maximum isolation/minimum insertion loss) is determined beside other parameters by the strength of the static magnetic field applied to the ferrite material of the isolator device. The centre frequency of the isolator can be shifted to some extend by adjusting the strength of the magnetic field applied to the ferrite material. Such isolators are known as tuneable isolator and provide a wider bandwidth than those in which a fixed static magnetic field is generated by permanent magnets attached to the ferrite material. The magnetic filed remains continuously available despite the actual isolation required in the presence of specific VSWR conditions.

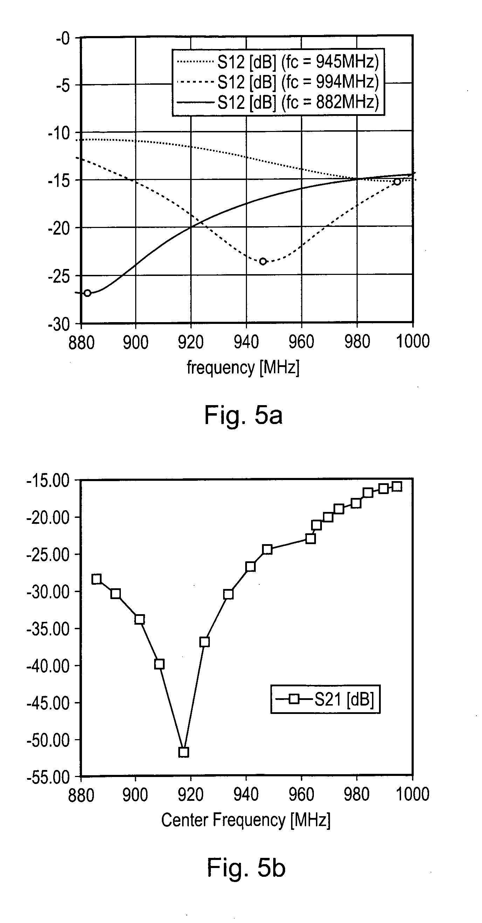

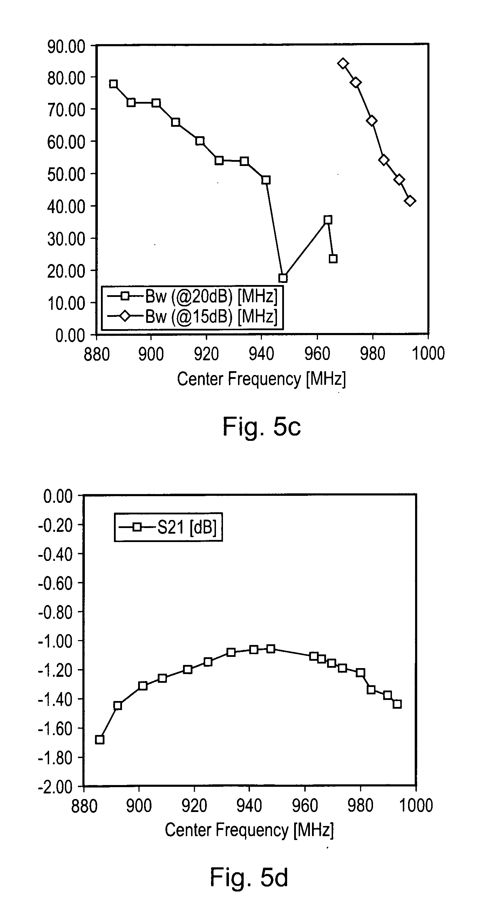

Figures 5(a) to 5(d) show, by example, how the centre frequency of an isolator can be tuned in the presence of a magnetic field applied externally to the isolator. The static magnetic field created by a permanent magnet is superimposed with a variable magnetic field applied externally to the device, resulting in increased or decreased overall magnetic field strength.

The operating bandwidth of the component can be extended up to about 168MHz compared to about 35MHz when no tuning is applied.

The transfer phase of such tuneable wideband isolators depends on its switching/tuning state. System phase errors might occur and may exceed the system specification if the change of isolator transfer phase (due to tuning/switching) is not synchronized to the system state and/or the isolator transfer phase remains uncompensated.

Known tuneable isolator circuits are advantageous since they do not require additional switches to be inserted in the RF signal path. Thus the performance in terms of insertion loss (switch closed) and cross talk (switch open) as well as the complexity of the RF circuitry can be maintained comparable to narrow band isolators.

However, the adjustment of the magnetic field in the isolator requires additional electrical energy whereas the activation of switches in the parallel and series circuits of Figures 3 and 4 (e.g. GaAs switch) does not consume significant amounts of electrical power. It is essential for any portable applications like mobile communication devices etc. to save as much electric power and extend battery life as much as possible.

### SUMMARY OF THE INVENTION

The object of the present invention is to provide a tuneable wideband isolator suitable for use in a portable wideband application such as multi-band UMTS and EDGE mobile communication devices which saves on power and has transfer phase linearization.

Adaptive power saving is achieved by avoiding excessive protection of sensitive parts (i.e. power amplifier output) against (high) VSWR. Isolation is limited such that VSWR is just sufficient to maintain compliance with system specification. It is based on the detection of reverse signals (over time) and consequent tuning of the centre frequency of the isolator. Tuning the centre frequency of an isolator over a wide range without degradation of system phase error requirement becomes possible because of isolator transfer phase linearization.

### BRIEF DESCRIPTION OF DRAWINGS

Embodiments of the present invention will now be described with reference to the accompanying drawings in which:
Figure 1 is a block diagram of a known CDMA full duplex transmitter system;
Figure 2a illustrates a graph of isolation loss |S12| versus frequency under normal ambient temperature conditions of an UMTS isolator component specification Murata, CE0401G95DCB000TT1;
Figure 2b illustrates a graph of insertion loss |S21| versus frequency under normal ambient temperature conditions of an UMTS isolator component specification Murata, CE0401G95DCB000TT1;
Figure 2c illustrates a graph of isolation loss |S12| versus frequency under normal ambient temperature conditions of an EDGE (GSM900) circulator component specification Murata, 925A 5701 M;
Figure 2d illustrates a graph of insertion loss |S21| versus frequency under normal ambient temperature conditions of an EDGE (GSM900) circulator component specification Murata, 925A 5701 M;
Figure 3 is a circuit diagram of a known basic parallel wideband isolator with bypass switch;
Figure 4 is a circuit diagram of a known basic series wideband isolator with bypass switch;
Figure 5a is a graph of isolation loss |S12| versus frequency under normal ambient temperature conditions of an externally tuned EDGE (GSM900) circulator Murata Component 925A 5701 M at different centre frequencies;
Figure 5b is a graph of isolation loss |S12| versus centre frequency under normal ambient temperature conditions of an externally tuned EDGE (GSM900) circulator Murata Component 925A 5701 M;
Figure 5c is a graph of operation bandwidth (Isolation |S12|=20dB and Isolation |S12|=15dB) versus centre frequency under normal ambient temperature conditions of an externally tuned EDGE (GSM900) circulator Murata Component 925A 5701 M;
Figure 5d is a graph of insertion loss |S21| versus centre frequency under normal ambient temperature conditions of an externally tuned EDGE (GSM900) circulator Murata Component 925A 5701 M;
Figure 6 is a block diagram of a full duplex transmitter with an isolator circuit including reverse signal detection that may be utilised in the isolator circuit of the present invention;
Figure 7 is a block diagram of a full duplex transmitter with an isolator circuit including reverse signal detection that may be utilised in the isolator circuit of the present invention;
Figure 8 is a block diagram of a full duplex transmitter with an isolator circuit including reverse signal detection that may be utilised in the isolator circuit of the present invention;
Figure 9 is a block diagram of a full duplex transmitter with an isolator circuit including reverse signal detection that may be utilised in the isolator circuit of the present invention;
Figure 10 is a block diagram of a full duplex transmitter with an isolator circuit according to a first embodiment of the present invention;
Figure 11 is a flow chart of operation of the isolator circuit of Figure 10;
Figure 12 is a graph of the transfer phase S12 versus the isolator centre frequency under normal ambient temperature conditions for an externally tuned GSM900-EDGE isolator Murata Component 925A 5701 M;
Figure 13 is a block diagram of a full duplex transmitter with an isolator circuit according to a second embodiment of the present invention; and
Figure 14 is a block diagram of a full duplex transmitter with an isolator circuit according to a third embodiment of the present invention;

### DETAILED DESCRIPTION OF PREFERRED EMBODIMENTS

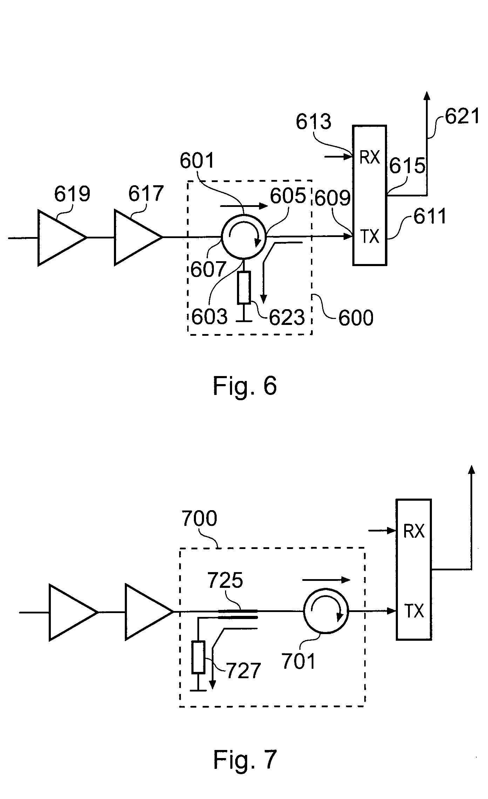

An isolator circuit will now be described with reference to Figure 6. The isolator circuit 600 comprises a tuneable isolator 601 having an externally accessible isolated port 603, an antenna port 605 and a power amplifier output port 607. The antenna port 605 of the isolator 601 is connected to a first terminal (TX-port) 609 of a duplexer 611 via a TX-path. The duplexer 611 has a second terminal (RX-port) 613 and a third terminal (an antenna port) 615. The second terminal 613 of the duplexer 611 is connected to the receiver path of the communication device (not shown or described here). The third terminal 615 is connected to an antenna system 621.

The power amplifier output port 607 of the isolator 601 is connected to the output of a power amplifier 617. The input of the power amplifier 617 is connected to the output of an amplifier driver 619. The input of the amplifier driver 619 being the input of the transmit path and connected to the output of a signal processing system as described for example with reference to Figure 1. The externally accessible isolated port 603 of the isolator 601 is connected to a detector 623. A suitable detector may be a scnolttkey diode detector as described for example in "Large Signal Detectors for Cellular Handsets and Base Stations", Raymond W. Waugh, Agilent Technologies.

Upon transmission of a signal, the signal is amplified by the power amplifier 617 and fed to the isolator 601 via the power amplifier output port 607 of the isolator 601 and to the first terminal 609 of the duplexer 611 via the antenna port 605 of the isolator 601 to be transmitted by an antenna system 621. The isolator 601, therefore, provides isolation between the antenna port 605 and the power amplifier port 607. Any reflected signal caused by impedance mismatch at the antenna system 621 will be isolated by the isolator 601 and fed into the externally accessible isolated port 603 and detected by the detector 623.

The reflected signal is then measured by the detector 623. The ratio of the forward signal (value known from power amplifier setting) and the reverse (reflected) signal can then be used to calculate the resulting VSWR.

The resulting calculated VSWR can then be utilised to adjust the centre frequency of the isolator to maintain a low VSWR to reduce power consumption of the isolator in accordance with the circuits of the embodiments of the present invention.

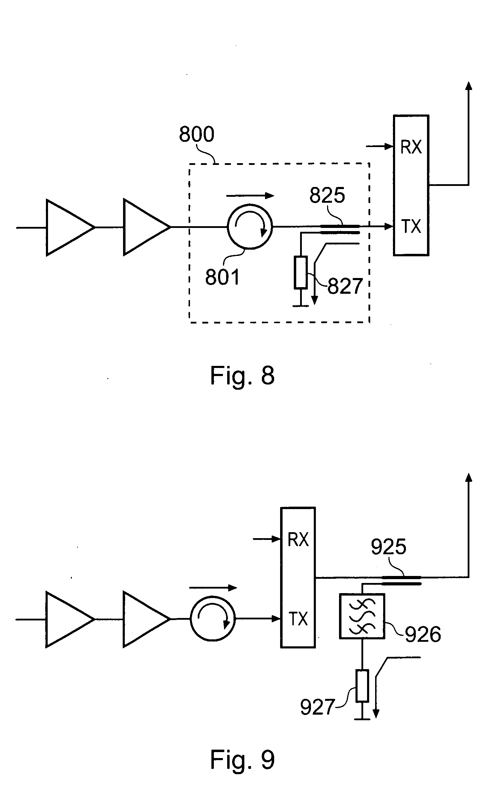

In the circuits of Figures 7 and 8, the detector 623 of Figure 1 is replaced by a directional coupler 725 and detector 727 inserted in the transmit path as shown in Figure 7 or, alternatively, in the transmit path 825, 827 as shown in Figure 8, or combination of circulator/isolator and directional coupler (not shown here). The detector 623 of Figure 1 may be replaced by a directional coupler 925, a bandpass filter 926 and detector 927 as illustrated in Figure 9.

Rather than measuring the reflected signal directly, as illustrated by the circuits of Figures 7 to 9, the resulting effect of reflected signals could also be measured at the power amplifier. For example, the shift of bias operation point may be measured. Side effects of VSWR like temperature change due to power dissipation of the power amplifier or isolator may also be used for detection purposes.

A directional coupler 1025 inserted in between the power amplifier 1017 and isolator 1001 can be used to set up a control loop that allows automatic tuning of the centre frequency of the isolator and thereby minimise the reflected signal at the power amplifier output port 1007 of the isolator 1001. A directional coupler in between the power amplifier and the isolator together with a circulator or a directional coupler in the antenna path can also be used to set up a control loop that minimises the reflected signal at the transmission port of the duplexer. Tuning the relative value of the reflected wave may allow further power saving by avoiding unnecessary low VSWR values at the power amplifier output.

In general, exceeding a certain value of VSWR (bias operation point shift etc) initiates the re-tuning procedure. Adjustments can be carried out continuously or in discrete steps together with VSWR threshold levels.

The centre frequency of the isolator can be adjusted in order to change the isolation to the desired value. Changing the magnetic field strength applied to the ferrite material changes the centre frequency of the isolator. For example a variable current through a coil creates the static but the variable magnetic field required. The overall magnetic field applied to the ferrite material of an isolator may consist of a fixed portion, generated by a permanent magnet and a variable portion generated by the current flow through a coil.

If the relationship of current vs. isolator centre frequency is known, the respective current value can be calculated or looked-up for the absolute radio frequency channel number/universal absolute radio frequency channel number (arcfcn/uarfcn) used to program the channel synthesiser and set directly. The channel synthesizer control voltage together with a voltage / current converter could be used instead to set the current value directly. If the relationship of current vs. circulator centre frequency is basically unknown, a control loop can be set up such that the current through the inductor is being varied until the VSWR at the power amplifier output port changes to the desired value.

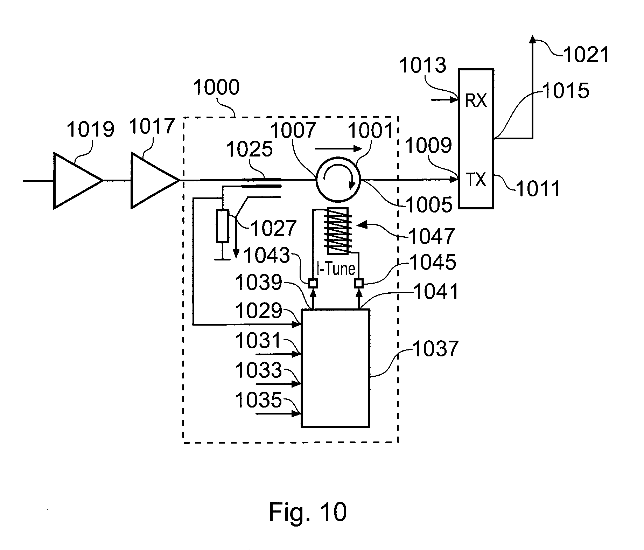

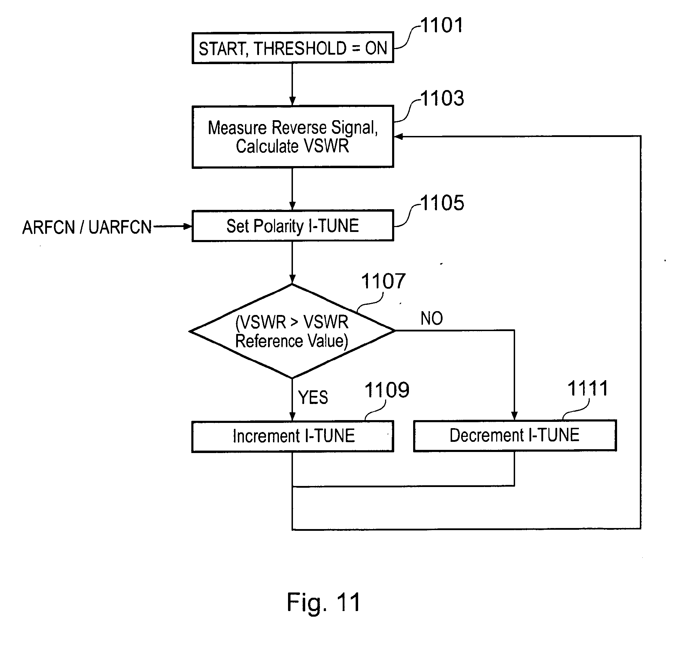

The first embodiment of the present invention will now be described in more detail with reference to Figures 10 and 11. The isolator circuit 1000 of the first embodiment comprises a tuneable isolator 1001. The tuneable isolator 1001 comprises an antenna port 1005 and a power amplifier output port 1007. The power amplifier output port 1007 is connected to the output of a power amplifier 1017. The input of the power amplifier 1017 is connected to the output of an amplifier driver 1019, the input of the amplifier driver 1019 providing the input of the transmit path. The antenna port 1005 is connected to a first terminal (TX-port) 1009 of a duplexer 1011. The second terminal 1013 of the duplexer 1011 is connected to the receiver path of the communication device (not shown or described here). The third terminal 1015 of the duplexer 1011 is connected to an antenna system 1021 of the communication device.

The isolator 1001 provides isolation between the antenna port 1005 and the power amplifier output port 1007 of the isolator 1001.

A directional coupler 1025 is connected between the power amplifier output port 1007 of the isolator 1001 and the output of the power amplifier 1017. The directional coupler 1025 is connected to a detector 1027. Any part of a signal reflected by the antenna system 1021 is then directed and measured by the detector 1027.

The detector 1027 is connected to a first terminal 1029 of a comparator and filter circuit 1037. The ARFCN/UARFCN signal is provided on a second input terminal 1031 of the comparator and filter circuit 1037. A VSWR Reference value and a VSWR threshold value are provided on a third and fourth input terminals 1033 and 1035, respectively, of the comparator and filter circuit 1037. A first output terminal 1039 of the comparator and filter system 1037 is connected to a first terminal 1043 of a coil 1047 for generating a variable magnetic field for tuning the isolator 1001. A second output terminal 1041 is connected to a second terminal 1045 of the tuning coil 1047 of the isolator 1001.

The comparator and filter circuit 1037 compares the actual VSWR value based on the reverse signal provided on the first input terminal 1029 of the comparator and filter circuit 1037 with the VSWR reference value and a VSWR threshold provided on the third and fourth input terminals 1033 and 1035 of the comparator and filter circuit 1037 to start and stop the tuning operation (switch between closed loop/ open loop operation). The comparator and filter circuit 1037 further comprises a decision circuit (not shown in Figure 10) that sets the polarity of a signal "I_Tune", that is the tuning current for the coil 1047 of the isolator 1001, according to the arcfcn/uarfcn setting and the isolator centre frequency. The comparator and filter circuit 1037 further comprises a filter to set loop bandwidth and damping factor of the closed loop.

Figure 11 shows the basic flow chart of an activated isolator control loop of Figure 10. In step 1101, the isolator circuit is activated into its initial state. In step 1103, the reverse or reflected signal is measured by the detector 1027 and the VSWR is calculated. Next, in step 1105, the polarity of I_Tune is set according to the arcfcn/uarfcn setting. In step 1107, it is determined whether the actual VSWR calculated in step 1103 is greater than the VSWR Reference Value. In the event that the actual VSWR calculated in step 1103 is greater than the VSWR Reference Value, the value of I_Tune is incremented in step 1109 and in the event that the actual VSWR calculated in step 1103 is less than the VSWR Reference Value, the value of I_Tune is decremented in step 1111. This forms the closed loop for adjusting the centre frequency of the isolator to provide the desired VSWR.

The static magnetic field of the isolator is composed of a fixed portion created by a permanent magnet and a variable portion generated by the current flow, I_Tune, through the tuning coil 1047. If there is no current flow through the tuning coil I_Tune = 0, the centre frequency of the isolator is determined by the fixed static magnetic field only, i.e. that created by the permanent magnets. Setting polarity and magnitude of the I_Tune value reinforces or dimishes the static magnetic field resulting in a shift of the isolator centre frequency. If the variable static magnetic field is strong enough, the permanent magnet can be re-magnetized such that the magnetic field remains unchanged; even the current through the coil is being reduced. The result can be used for further power saving.

In the event of changing VSWR at the antenna port, the control loop shall control the centre frequency of the isolator, such that the VSWR at the power amplifier output port remains acceptably low. Tuning the centre frequency of the isolator will change the transfer phase of the isolator. This may lead to a system phase error since the change of phase induced from outside may take place at any time and speed without synchronisation to the system itself, for example, tuning the centre frequency by about 110MHz leads to a transfer phase shift of about 230° (fc=885MHZ to fc=995MHZ).

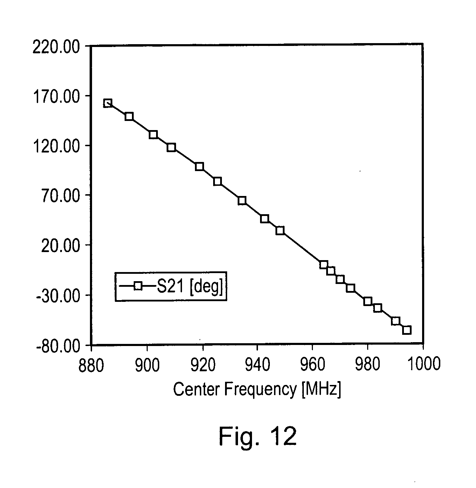

Figure 12 shows the transfer phase S21 of an externally tuned GSM900 EDGE Murata circulator Component 925A 5701 M with its centre frequency tuned (with an external magnetic field) from about 885MHz to 995MHZ. It should be noted that all results include the effects of the test board the device under test is mounted on.

In order to keep the phase error within specified limits, the transfer phase of the tuneable isolator is compensated. Transfer phase compensation of the isolator can be realised by an additional phase shift in the transmit signal which is of opposite direction to the disturbance such that the overall transfer phase remains constant.

Discrete steps of additional phase shift can be then introduced with transmission lines of different length (for example pin-diodes in combination with transmission lines) inserted in the transmit path. Continuous additional phase shift can be introduced with variable phase shift circuits (for example varicap diodes) inserted in the transmit path.

Discrete and continuous phase shift elements may be realised and inserted in the transmit path and operate at RF- and IF- frequencies but may also be realised in hardware and software for baseband signals.

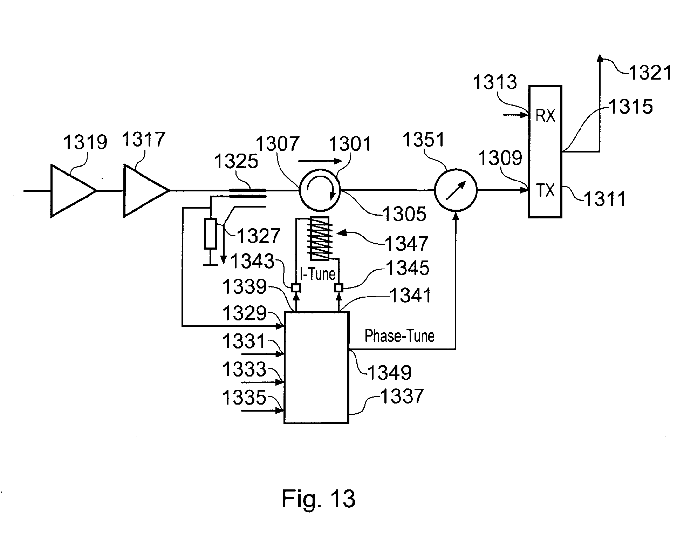

The second embodiment of the present invention will now be described with reference to Figure 13. The isolator circuit 1300 of the second embodiment comprises a tuneable isolator 1301. The tuneable isolator 1301 comprises an antenna port 1305 and a power amplifier output port 1307. The power amplifier output port 1307 is connected to the output of a power amplifier 1317. The input of the power amplifier 1317 is connected to the output of an amplifier driver 1319, the input of the amplifier driver 1319 providing the input of the transmit path. The antenna port 1305 is connected to a first terminal (TX-port) 1309 of a duplexer 1311. The second terminal 1313 of the duplexer 1311 is connected to the receiver path of the communication device (not shown or described here). The third terminal 1315 of the duplexer 1311 is connected to an antenna system 1321 of the communication device.

The isolator 1301 provides isolation between the antenna port 1305 and the power amplifier output port 1307 of the isolator 1301.

A directional coupler 1325 is connected between the power amplifier output port 1307 of the isolator 1301 and the output of the power amplifier 1317. The directional coupler 1325 is connected to a detector 1327. Any part of a reflected signal leaving the power amplifier output port 1307 is then directed and measured by the detector 1327.

The detector 1327 is connected to a first terminal 1329 of a comparator and filter circuit 1337. The ARFCN/UARFCN signal is provided on the second input terminal 1331 of the comparator and filter circuit 1337. A VSWR Reference value and a VSWR threshold value are provided on the third and fourth input terminals 1333 and 1335, respectively of the comparator and filter circuit 1337. A first output terminal 1339 of the comparator and filter system 1337 is connected to a first terminal 1343 of a coil 1347 for generating the variable magnetic field for tuning the isolator 1301. A second output terminal 1341 is connected to a second terminal 1045 of the tuning coil 1347 of the isolator 1301.

As mentioned with reference to the first embodiment above, the comparator and filter circuit 1337 compares the actual VSWR value based on the reverse signal provided on the first input terminal 1329 of the comparator and filter circuit 1337 with the VSWR reference value and a VSWR threshold provided on the third and fourth input terminal 1333 and 1335 of the comparator and filter circuit 1337 to start and stop the tuning operation (switch between closed loop/ open loop operation). The comparator and filter circuit 1337 further comprises a decision circuit (not shown in Figure 13) that sets the polarity of a signal "I_Tune", that is the tuning current for the coil 1347 of the isolator 1301, according to the ARCFCN/UARFCN setting and the isolator centre frequency. The comparator and filter circuit 1337 further comprises a filter to set loop bandwidth and damping factor of the closed loop.

A third output terminal 1349 of the comparator and filter circuit 1337 is connected to a phase shift block 1351. The phase shift block 1351 is connected between the antenna output port 1305 of the isolator 1301 and the first terminal 1309 of the duplexer 1311.

The phase shift block 1351(variable phase shift) compensates for isolator transfer phase at RF frequencies. The variable phase shift block 1351. is inserted in the transmit path, between the isolator 1301 and the first terminal (TX-port) 1309 of the duplexer 1311, but it can be inserted at other positions as well. The phase shift control signal Phase_Tune output from the third output terminal 1349 of the comparator and filter circuit 1337 can be derived from the isolator tuning signal I_Tune signal such that the combined transfer phase shift of the isolator and the phase shifter can be kept constant. In this example, the setting of the variable phase shift is based on the knowledge of the dependency of isolator tuning state and isolator phase shift. The dependency can be derived by calibration measurement and the result can be stored in a look up table.

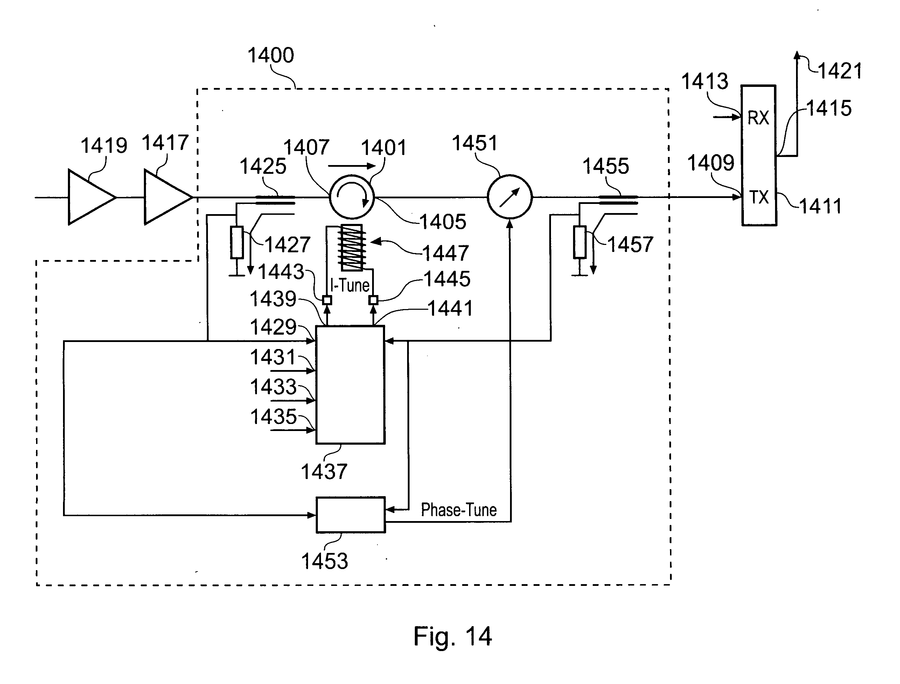

Alternatively, the variable phase shift element can be incorporated into a phase shift control loop such that the setting of the variable phase shift element (Phase_Tune signal) is being executed automatically. Figure 14 shows the block diagram of a full duplex transmitter with isolator control loop and phase shift control loop for transfer phase compensation at RF frequencies.

The third embodiment of the present invention, as shown in Figure 14, comprises an isolator circuit 1400. The isolator circuit 1400 comprises a tuneable isolator 1401. The tuneable isolator 1401 comprises an antenna port 1405 and a power amplifier output port 1407. A power amplifier 1417 is provided on the power amplifier output port 1407. The input of the power amplifier 1417 is connected to the output of an amplifier driver 1419, the input of the amplifier driver 1419 providing the input of the transmit path. A second terminal 1413 of a duplexer 1411 is connected to the receiver path of the communication device (not shown or described here). A third terminal 1415 of the duplexer 1411 is connected to an antenna system 1421 of the communication device.

The isolator 1401 provides isolation between the antenna port 1405 and the power amplifier output port 1407 of the isolator 1401.

A directional coupler 1425 is connected between the power amplifier output port 1407 of the isolator 1401 and the output of the power amplifier 1417. The directional coupler 1425 is connected to a detector 1427. Any part of a signal reflected leaving the power amplifier port 1407 of the isolator 1401 is then directed and measured by the detector 1427.

The detector 1427 is connected to a first terminal 1429 of a comparator and filter circuit 1437 and to a first input of a phase shift comparator 1453. The ARFCN/UARFCN signal is provided on the second input terminal 1431 of the comparator and filter circuit 1437. A VSWR Reference value and a VSWR threshold value are provided on the third and fourth input terminals 1433 and 1435, respectively of the comparator and filter circuit 1437. A first output terminal 1439 of the comparator and filter system 1437 is connected to a first terminal 1443 of a coil 1447 for generating the variable magnetic field for tuning the isolator 1401. A second output terminal 1441 of the comparator and filter system 1437 is connected to a second terminal 1445 of the tuning coil 1447 of the isolator 1401.

The comparator and filter circuit 1437 compares the actual VSWR value based on the reverse signal provided on the first input terminal 1429 of the comparator and filter circuit 1437 with the VSWR reference value and a VSWR threshold provided on the third and fourth input terminal 1433 and 1435 of the comparator and filter circuit 1437 to start and stop the tuning operation (switch between closed loop/ open loop operation). The comparator and filter circuit 1437 further comprises a decision circuit (not shown in Figure 14) that sets the polarity of a signal "I_Tune", that is the tuning current for the coil 1447 of the isolator 1401, according to the arcfcn/uarfcn setting and the isolator centre frequency. The comparator and filter circuit 1437 further comprises a filter to set loop bandwidth and damping factor of the closed loop.

The output of the phase shift comparator 1453 is connected to a phase shift block 1451 and feeds the Phase_Tune signal to the phase shift block 1451. The phase shift block 1451 is positioned between the antenna port 1405 and the first terminal 1409 of the duplexer 1411. In addition a directional coupler 1455 and detector 1457 is inserted between the output of the phase shift block 1451 and the first terminal 1409 of the duplexer 1411. Any reflected signal having the first terminal 1409 of the duplexer 1411 is detected and measured by the detector 1457. The measured reflected signal is fed to the comparator and filter circuit 1437 and the phase shift comparator 1453.

The additional second directional coupler 1455 and detector 1457 and the phase shift comparator 1453 have been added to the isolator circuit 1400 in order to set up a phase shift control loop. The control adjusts the Phase_Tune signal such that the overall phase shift remains constant. The first directional coupler 1425 and detector 1427 is used to pick up the phase information of the transmit signal after isolation. The signal detected by the first detector 1427 and the signal detected by the second detector are compared in the phase shift comparator 1453 and the Phase_Tune signal is derived such that the overall phase shift of isolator 1401 and variable phase shift is kept constant.

The phase information of the forward signal can be used instead of the reverse signal to set up the phase shift control loop. The forward signal detection could then also be reused for an output power control loop.

Any one of the different arrangements of detection of the reverse signal as illustrated in Figures 6 to 9 can be utilised in any one of the isolator circuits illustrated on Figures 7 to 9 and described above.

Although preferred embodiments of the apparatus and method of the present invention has been illustrated in the accompanying drawings and described in the forgoing detailed description, it will be understood that the invention is not limited to the embodiments disclosed, but is capable of numerous variations, modifications without departing from the scope of the invention as set out in the following claims.

## Claims

1. An isolator circuit for an antenna system comprising a tuneable isolator; a detector for detecting a reflected signal; and a feedback control loop for automatically tuning the centre frequency of the isolator in response to the reflected signal to reduce power consumption of the isolator circuit.

2. An isolator circuit according to claim 1, wherein the centre frequency is controlled to maintain the VSWR at a predetermined threshold value.

3. An isolator circuit according to claim 1 or 2, wherein the circuit further comprises calculating means for calculating the VSWR of the antenna and comparing the calculated VSWR with a threshold VSWR to control the centre frequency of the isolator.

4. An isolator circuit according to any one of the preceding claims, wherein the detector comprises a directional coupler and detector.

5. An isolator circuit according to claim 4, wherein the detector is in the transmit path.

6. An isolator circuit according to claim 4, wherein the detector is in the antenna path.

7. An isolator circuit according to any one of the preceding claims, wherein the detector comprises means for measuring the shift of bias operation point of the power amplifier.

8. An isolator circuit according to any one of the preceding claims, wherein the isolator comprises means to vary the magnetic field strength applied to the ferrite material of the isolator to change the centre frequency of the isolator.

9. An isolator circuit according to claim 7, wherein the magnetic filed applied to the ferrite material of the isolator comprises a fixed portion and a variable portion.

10. An isolator circuit according to claim 8, wherein the fixed portion is supplied by permanent magnets.

11. An isolator circuit according to claim 8 or 9, wherein the variable portion is a static magnetic field supplied by coils; the field strength is varied by varying the current supplied to the coils.

12. An isolator circuit according to claim 9, 10 or 11, wherein the variable magnetic field causes re-magnetisation of the permanent magnets.

13. An isolator circuit according to any one of preceding claims, wherein the circuit further comprises compensation means for compensating the transfer phase of the isolator.

14. An isolator circuit according to claim 13, wherein the compensation means includes phase shift means.

15. A wireless communication device including a power amplifier and antenna system and an isolator circuit according to any one of the preceding claims connected between the output of the power amplifier and the input of the antenna system.

16. A method for tuning an isolator of an antenna system comprising the steps of:
detecting a reflected signal;
automatically tuning the centre frequency of the isolator in response to the reflected signal to reduce power consumption of the isolator circuit.

17. A method according to claim 16, wherein the method further comprises the step of:
maintaining the VSWR at a predetermined threshold value.

18. A method according to claim 16 or 17, wherein the method further comprises the steps of:
calculating the VSWR of the antenna;
comparing the calculated VSWR with a threshold VSWR to control the centre frequency of the isolator.

19. A method according to any one of claims 16-18, wherein the method further comprises the step of:
measuring the shift of bias operation point of the power amplifier.

20. A method according to any one of claims 16-19, wherein the method further comprises the step of compensating for the transfer phase of the isolator.
